# EUROPÄISCHE PATENTSCHRIFT

(11) **EP 1 254 285 B1**
(45) Veröffentlichungstag und Bekanntmachung des Hinweises auf die Patenterteilung: **07.04.2004**
(21) Anmeldenummer: 01915170.3
(22) Anmeldetag: 27.01.2001
(51) Int. Cl.: E01C 5/06

(54) **BAUSATZ AUS PFLASTERSTEINEN BZW. PFLASTERPLATTEN AUS BETON**
CONCRETE PAVING STONE OR FLAG STONE KIT
JEU DE CONSTRUCTION COMPOSE DE PAVES OU DE PLAQUES DE BETON

(30) Priorität: 08.02.2000 DE 10005345
(43) Veröffentlichungstag der Anmeldung: 06.11.2002
(73) Patentinhaber: SF-Kooperation GmbH Beton-Konzepte, 28717 Bremen (DE)
(72) Erfinder: HAGENAH, Gerhard, 27726 Worpswede (DE)
(74) Vertreter: Bolte, Erich, Dipl.-Ing.
(86) Internationale Anmeldenummer: PCT/EP2001/000889
(87) Internationale Veröffentlichungsnummer: WO 2001/059217

(56) Entgegenhaltungen:
- WO-A-00/09808
- DE-A- 19 529 378
- DE-U- 29 821 555

## Beschreibung

Die Erfindung betrifft einen Bausatz aus Pflastersteinen bzw. Pflasterplatten aus Beton zur Erstellung von Erdreichabdeckungen, wobei jeder Pflasterstein im Wesentlichen aufrechte Seitenflächen und an diesen angeordnete, aufrechte Abstandhalter zur Bildung von Fugen zwischen benachbarten Pflastersteinen aufweist, wobei an einer Seitenfläche jedes Pflastersteins mindestens zwei Abstandhalter nebeneinander angeordnet sind.

Derartige Pflastersteine bzw. Pflasterplatten sind z.B. in DE 298 21 555 U offenbart und werden zur Bildung von Erdreichabdeckungen auf vorbereitetem Untergrund mit Fugen zwischen benachbarten Pflastersteinen bzw. Pflasterplatten verlegt. Die Verlegung von Pflastersteinen bzw. Pflasterplatten kann von Hand oder auch mit Hilfe von Verlegemaschinen erfolgen, wobei mehrere Pflastersteine bzw. Pflasterplatten in einer Gruppe von der Verlegemaschine aufgenommen und verlegt werden. Bei der Gruppe von Pflastersteinen bzw. Pflasterplatten kann es sich zum Beispiel um eine Lage von auf einer Palette gelagerten Pflastersteinen bzw. Pflasterplatten handeln.

Bei der Verlegung werden die Pflastersteine bzw. Pflasterplatten neben bereits verlegte Pflastersteine bzw. Pflasterplatten abgesetzt und in eine korrekte Relativlage zu benachbarten Pflastersteinen bzw. Pflasterplatten bewegt, dies kann zum Beispiel durch horizontales Verschieben erfolgen.

Der Erfindung liegt die Aufgabe zugrunde, einen Bausatz aus Pflastersteinen bzw. - platten vorzuschlagen, der einfach zu verlegen ist und insbesondere die korrekte Positionierung der Pflastersteine bzw. Pflasterplatten des Bausatzes erleichtert.

Zur Lösung dieser Aufgabe ist der erfindungsgemäße Bausatz dadurch gekennzeichnet, dass
a) einander zugewandte Seitenflächen der nebeneinander angeordneten Abstandhalter mindestens in einem oberen Teilbereich konvergierend zu einer Unterseite des Pflastersteins hin verlaufen,
b) an einer weiteren Seitenfläche jedes Pflastersteins mindestens ein einzelner Abstandhalter angeordnet ist, der innerhalb einer verlegten Erdreichabdeckung zwischen die einander zugewandten Seitenflächen zweier nebeneinander angeordneter Abstandhalter eines benachbarten Pflastersteins tritt.

Durch die konvergierenden Seitenflächen der nebeneinander angeordneten Abstandhalter müssen die Pflastersteine bzw. Pflasterplatten vor dem Absetzen lediglich derart genau positioniert werden, dass diese mit ihren einzelnen Abstandhaltern jeweils in einem Bereich oberhalb und zwischen den einander zugewandten schrägen Seitenflächen zweier nebeneinander angeordneter Abstandhalter bereits verlegter Pflastersteine bzw. Pflasterplatten liegen. Während des Absetzvorgangs werden die einzelnen Abstandhalter bzw. die Pflastersteine an den schrägen Seitenflächen der Abstandhalter der verlegten Pflastersteine entlang automatisch in die korrekte Position geführt. Auf diese Weise brauchen die zu verlegenden Pflastersteine bzw. Pflasterplatten in geringerem Maße vor dem Absetzen ausgerichtet zu werden, wodurch Zeit bei der Verlegung gespart wird.

Die nebeneinander angeordneten Abstandhalter sind so ausgebildet, dass die einander zugewandten Seitenflächen benachbarter Abstandhalter in Richtung der Oberseite des Pflastersteines bzw. der Pflasterplatte divergieren, so dass eine sich in Absetzrichtung verengende, trichterförmige Öffnung gebildet wird, in die die einzelnen Abstandhalter benachbarter Pflastersteine bzw. Pflasterplatten beim Absetzen eintreten und durch Anlage der einzelnen Abstandhalter an den schrägen Seitenflächen der nebeneinander angeordneten Abstandhalter der bereits verlegten Pflastersteine in die korrekte Endlage geführt werden. Die zu verlegenden Pflastersteine werden somit während des Verlegens durch die bereits verlegten Pflastersteine ausgerichtet bzw. justiert. Zudem wird ein Verkanten der Pflastersteine beim Absetzen zuverlässig verhindert.

Gemäß einer vorteilhaften Weiterbildung der Erfindung sind die nebeneinander angeordneten Abstandhalter in einem Abstand zueinander positioniert, der größer als die Breite des oder der zwischen ihnen liegenden Abstandhalter benachbarter Pflastersteine bzw. Pflasterplatten ist. Durch die derartige Ausbildung der Abstandhalter wird das Verlegen der Pflastersteine bzw. Pflasterplatten neben bereits verlegte Pflastersteine bzw. Pflasterplatten durch einen größeren Toleranzbereich bei der Positionierung vor dem Absetzen weiter erleichtert. Zudem ist auf diese Weise die Berücksichtigung von herstellungsbedingten Maßtoleranzen möglich. Nach dem Verfüllen der Fuge zwischen den benachbarten Pflastersteinen bzw. Pflasterplatten können zwischen den Pflastersteinen bzw. Pflasterplatten horizontale Verbundkräfte übertragen werden.

Weitere Einzelheiten der Erfindung werden nachfolgend anhand von in den Zeichnungen dargestellten Ausführungsbeispielen näher erläutert. Es zeigt:
- Fig. 1: einen Pflasterstein im Grundriss,
- Fig. 2: einen Pflasterstein in räumlicher Darstellung,
- Fig. 3: einen Pflasterstein gemäß Fig. 2 in einer Seitenansicht,
- Fig. 4: einen vergrößerten Ausschnitt der Seitenansicht gemäß Fig. 3 im Bereich der Abstandhalter,
- Fig. 5: einen Ausschnitt der Seitenansicht gemäß Fig. 3 eines alternativen Ausführungsbeispiels,
- Fig. 6: eine Draufsicht auf eine Erdreichabdeckung aus Pflastersteinen,
- Fig. 7: einen vergrößerten Ausschnitt der Erdreichabdeckung gemäß Fig. 5 und
- Fig. 8: eine schematische Darstellung des Absetzvorgangs.

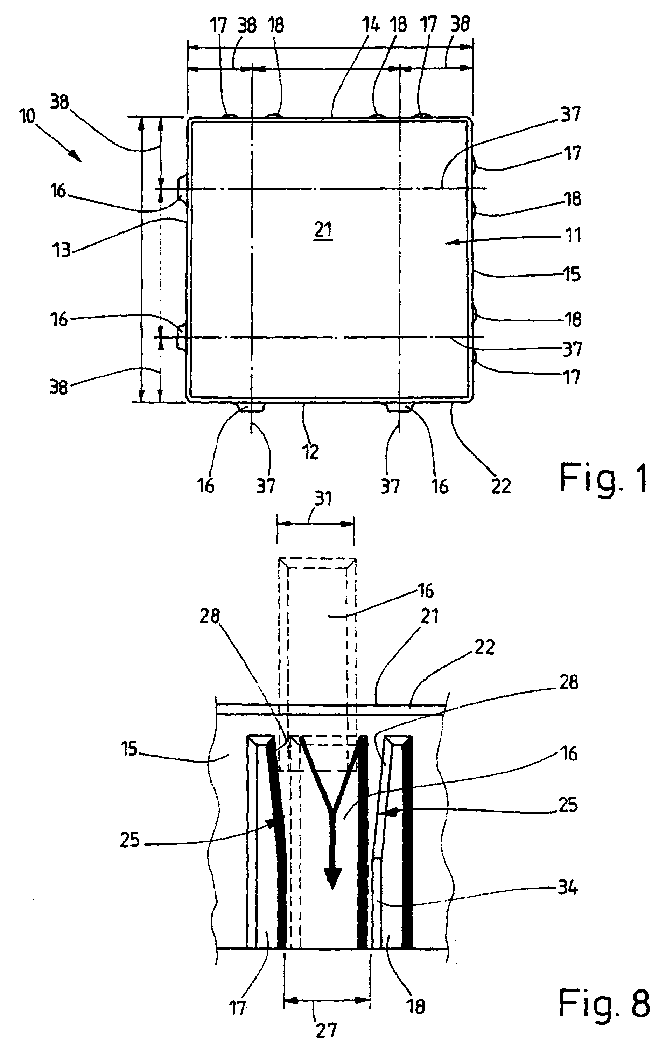

Bei dem gezeigten Ausführungsbeispiel besteht der gezeigte Pflasterstein 10 aus einem im Grundriss rechteckigem oder quadratischem Steinkörper 11 mit im Wesentlichen auf-rechten Seitenflächen 12, 13, 14, 15. An den Seitenflächen 12, 13, 14, 15 sind Abstandhalter 16, 17, 18 angeordnet, die innerhalb einer verlegten Erdreichabdeckung 20 Fugen 19 zwischen benachbarten Pflastersteinen 10 bilden. An einer Oberseite 21 des Steinkörpers 11 sind die Pflastersteine 10 mit einer umlaufenden Fase 22 versehen. Die Grundrissabmessungen des in Fig. 1 gezeigten Pflastersteins betragen ca. 300 x 300 mm, bei einer Höhe von ca. 80 mm.

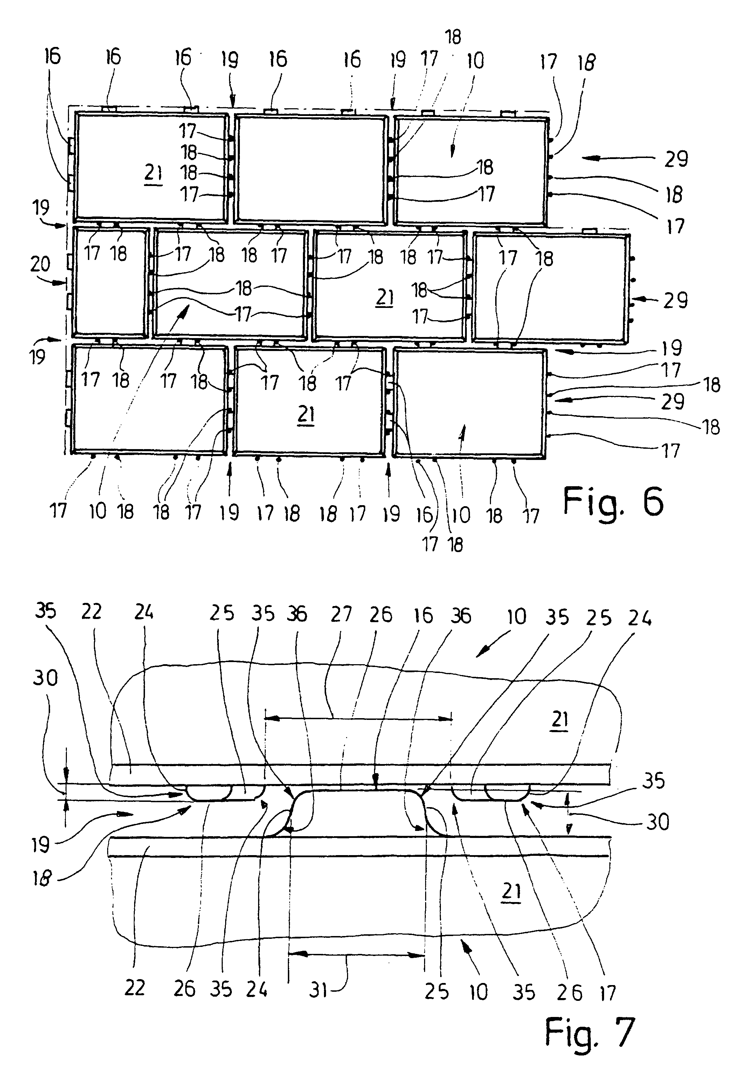

Die Abstandhalter 16, 17, 18 sind langgestreckte, stegförmige Gebilde, die an den Seitenflächen 12, 13, 14, 15 des Steinkörpers 11 angeordnet sind und sich ausgehend von einer Unterseite 23 in Richtung der Oberseite 21 des Steinkörpers 11 erstrecken. Die Abstandhalter 16, 17, 18 schließen unterseitig mit der Unterseite 23 des Steinkörpers 11 ab und weisen eine Höhe 32 auf, die bei diesem Ausführungsbeispiel geringer als eine Steinhöhe 33 des Pflastersteins 10 ist, beispielsweise 70 mm. Grundsätzlich können die Abstandhalter 16, 17, 18 sich aber auch über die gesamte Steinhöhe 33 erstrecken. Die Abstandhalter 16, 17, 18 sind im Grundriss im Wesentlichen rechteckige Gebilde mit zwei sich gegenüberliegenden Seitenflächen 24, 25 und einer von der jeweiligen Seitenfläche 12, 13, 14, 15 abgewandten Stimfläche 26. Innerhalb der verlegten Erdreichabdeckung 20 liegen die Pflastersteine 10 mit den Stirnflächen 26 der Abstandhalter 16, 17, 18 an den Seitenflächen 11, 12, 13, 14 benachbarter Pflastersteine 10 an, wodurch zwischen den Pflastersteinen 10 eine gleichmäßige Fuge 19 gebildet wird, die mit Fugenfüllmaterial verfüllt wird (Fig. 6).

Die Pflastersteine 10 werden vorzugsweise in an sich bekannten Betonformen hergestellt, die aus einem oben und unten offenen Formrahmen besteht, der mehrere Formnester aufweist und auf einem Unterlagsbrett ruht. Nach dem Einfüllen des Betons in die Formnester werden oberhalb der Form angeordnete Stempel in die Form abgesenkt und nachfolgend der Formrahmen nach oben von den Pflastersteinen 10 abgezogen. Die Abstandhalter 16, 17, 18 werden bei dieser Herstellungsmethode durch entsprechende Ausnehmungen in den Wänden des Formrahmens gebildet.

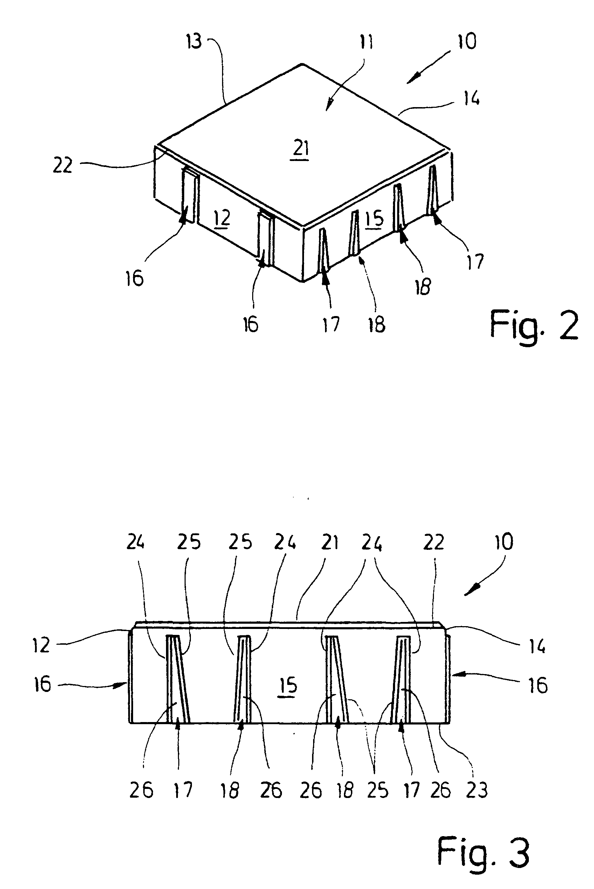

Das in Fig. 1 bis Fig. 8 dargestellte Ausführungsbeispiel eines Pflastersteins 10 weist an zwei benachbarten Seitenflächen 14, 15 jeweils vier, paarweise nebeneinander liegend angeordnete Abstandhalter 17, 18 und an zwei weiteren Seitenflächen 12, 13 jeweils zwei einzelne Abstandhalter 16 auf. Die Abstandhalter 17, 18 der Seitenflächen 14, 15 verfügen über jeweils eine im wesentlichen vertikale Seitenfläche 24 und eine gegenüber einer gedachten vertikalen Ebene mindestens teilweise geneigte Seitenfläche 25, so dass die Seitenflächen 24, 25 der Abstandhalters 17, 18 in Richtung der Oberseite 21 des Steinkörpers 11 konvergieren und in der Ansicht eine trapez- oder keilförmige Gestalt aufweisen (Fig. 3). Die Neigung der Seitenfläche 25 beträgt im gezeigten Ausführungsbeispiel 5° gegenüber einer gedachten vertikalen Ebene, kann aber auch größer oder kleiner als der gezeigte Winkel sein. Die maximale Breite der einzelnen Abstandhalter 16 beträgt im gezeigten Ausführungsbeispiel ca. 18 mm.

Die Abstandhalter 16, 17, 18 sind derart an den Seitenflächen 12, 13, 14, 15 angeordnet, dass jeweils ein einzelner Abstandhalter 16 an den Seitenflächen 12 bzw. 13 genau mittig zwischen zwei Abstandhaltern 17, 18 an einer gegenüberliegenden Seitenfläche 14 bzw. 15 liegt. Die Abstandhalter 16, 17, 18 weisen dabei zu den jeweils benachbarten Seitenflächen einen derartigen Abstand auf, dass eine (gedachte) Achse 37, die durch die Mitte der Abstandhalter 16 und durch die Mitte zwischen den paarweise angeordneten Abstandhaltern 17, 18 der gegenüberliegender Seitenfläche verläuft, exakt parallel zu der zum Abstandhalter 16 benachbarten Seitenfläche ist. Der Abstand 38 der Achse 37 von der benachbarten Seitenfläche beträgt im gezeigten Ausführungsbeispiel jeweils ¼ der jeweiligen Steinbreite bzw. -länge.

Weiterhin sind die Abstandhalter 16, 17, 18 im gezeigten Ausführungsbeispiel im Grundriss mit abgerundeten Außenecken 35 im Übergang von den Seitenflächen 24, 25 zur Stirnfläche 26 und über gerundete Übergänge 36 von den Seitenflächen der Abstandhalter 16 zu den Seitenflächen 12, 13, 14, 15 des Steinkörpers 11 versehen.

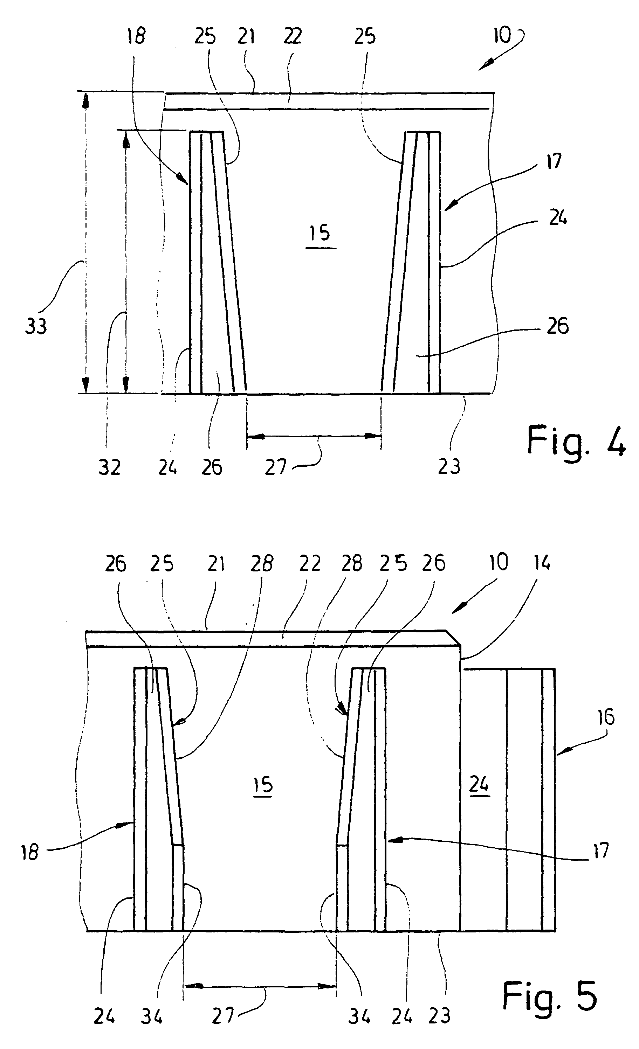

Die Abstandhalter 17, 18 sind derart an der Seitenfläche 14, 15 angeordnet, dass jeweils die geneigten Seitenflächen 25 einander in einem Abstand 27 gegenüberliegen. Hierdurch entsteht zwischen den einander zugewandten Seitenflächen 25 der Abstandhalter 17, 18 ein sich zur Oberseite 21 des Steinkörpers 11 erweiternder, trichterförmiger Zwischenraum (Fig. 4). Die Abstandhalter 16 an den Seitenflächen 12, 13 weisen bei diesem Ausführungsbeispiel parallele, senkrechte Seitenflächen 24, 25 auf, so dass diese Abstandhalter 16 eine konstante Breite aufweisen. Grundsätzlich können diese aber auch geneigt sein.

Fig. 5 zeigt eine bevorzugte Ausbildung der Seitenflächen 25 der Abstandhalter 17, 18, diese sind nämlich lediglich in einem oberen Teilbereich 28 geneigt und verlaufen in einem unteren Teilbereich 34 im Wesentlichen vertikal. Eine derartige Ausbildung der Abstandhalter 17, 18 gewährleistet einerseits eine korrekte Führung der zu verlegenden Pflastersteine 10 in die richtige Relativlage. Andererseits steht nach der Verlegung der Pflastersteine 10 zwischen den vertikalen Seitenflächen der Abstandhalter 16 und den im Wesentlichen vertikal gerichteten und einander zugewandten unteren Teilbereichen 34 der benachbarten Abstandhalter 17, 18 eine ausreichende Kraftübertragungsfläche für horizontale Verbundkräfte zur Verfügung. Beschädigungen der Abstandhalter 16, 17, 18 werden somit vermieden und eine sichere Ableitung der horizontalen Verbundkräfte gewährleistet. Im gezeigten Ausführungsbeispiel ist der Abstand 27 zwischen den unteren Teilbereichen 34 der benachbarten Abstandhalter 17, 18 lediglich geringfügig größer, als die Breite 31 der Abstandhalter 16, beispielsweise beidseitig etwa 2 mm.

Fig. 6 zeigt einen Bausatz aus erfindungsgemäßen Pflastersteinen 10 die zu einer Erdreichabdeckung 20 verlegt sind. Dabei weist der in Fig. 6 gezeigte Pflasterstein 10 im Unterschied zum in Fig. 1 gezeigten Pflasterstein 10 einen rechteckigen Grundriss auf. Innerhalb der Erdreichabdeckung 20 sind die Pflastersteine 10 nebeneinander in Reihen 29 angeordnet, wobei die Reihen 29 zueinander um jeweils eine halbe Steinlänge versetzt sind. Dabei treten einzelne Abstandhalter 16 eines Pflastersteins 10 zwischen paarweise nebeneinanderliegende Abstandhalter 17, 18 benachbarter Pflastersteine 10, so dass die Pflastersteine 10 untereinander horizontalen Verbund aufweisen. Die Abstandhalter 16 können auch eine größere oder kleinere Fugentiefe 30 aufweisen, so dass zwischen den Pflastersteinen 10 Fugen mit entsprechend größerer oder kleinerer Breite gebildet werden.

Bei der Verlegung der in Fig. 6 gezeigten Erdreichabdeckung 20 werden die Pflastersteine 10 von oberhalb der Erdreichabdeckung 20 in diese in vertikaler Richtung abgesenkt und abgesetzt, was auch mit Hilfe von Verlegemaschinen erfolgen kann. Die Pflastersteine 10 können beispielsweise wie gezeigt von links nach rechts zu Reihen 29 verlegt werden. Dabei treten die einzelnen Abstandhalter 16 an zwei benachbarten Seitenflächen 12, 13 des zu verlegenden Pflastersteins 10 in den sich zur Oberseite 21 erweiternden, trichterförmigen Zwischenraum zwischen den sich gegenüberliegenden Seitenflächen 25 der paarweise angeordneten Abstandhalter 17, 18 bereits verlegter Pflastersteine 10. Durch den sich in Absenkrichtung verengenden Zwischenraum zwischen den geneigten Seitenflächen 25 der benachbarten Abstandhalter 17, 18 werden die Abstandhalter 16 und somit der zu verlegende Pflasterstein 10 in die exakte Relativposition geführt. Die geneigten Seitenflächen 25 dienen somit als Führungsflächen. Fig. 8 zeigt diese Justierung in einer schematischen Darstellung.

Fig. 7 zeigt eine vorteilhafte Weiterbildung des Pflastersteins 10. Dabei ist der Abstand 27 zwischen den geneigten Seitenflächen 25 zweier benachbarter Abstandhalter 17, 18 größer als die Breite 31 des zwischen diese tretenden Abstandhalters 16 eines benachbarten Pflastersteins 10. Auf diese Weise ergibt sich beim Verlegen der Pflastersteine 10 ein zusätzlicher Spielraum, der das Verlegen weiter vereinfacht. Im gezeigten Beispiel beträgt die Breite 31 des Abstandhalters 16 an der Unterseite in etwa 25 mm und der Abstand 27 zwischen den geneigten Seitenflächen 25 an der schmalsten Stelle etwa 35 mm. Auf diese Weise ergibt sich eine beidseitige Toleranz von je 5 mm. Nach Verfüllung der Fugen 19 mit Fugenfüllmaterial können weiterhin Horizontalkräfte auf benachbarte Pflastersteine 10 übertragen werden. Eine solche Ausbildung der Pflastersteine 10 ist zum Beispiel vorteilhaft zur Ausgleichung von herstellungsbedingten Maßtoleranzen der Pflastersteine 10.

Die Erfindung ist grundsätzlich nicht auf die vorliegende Ausführungsform beschränkt, es sind zum Beispiel auch Pflastersteine 10 denkbar, die eine abweichende Anzahl oder Anordnung von Abstandhaltem 16, 17, 18 aufweisen. Weiterhin können zwischen die paarweise angeordneten Abstandhalter 17, 18 auch mehrere Abstandhalter 16 treten, wobei die Breite 31 dann durch den Abstand der voneinander abgewandten Seitenflächen 24, 25 der Abstandhalter 16 gebildet wird. Weiterhin können die Formsteine auch so ausgebildet sein, dass die Seitenflächen 24, 25 der Abstandhalter 16, 17, 18 von der Oberseite 21 zur Unterseite 23 konvergieren.

Nach einer besonderen Weiterbildung, die auch eine selbständige Lösung des der Erfindung zugrunde liegenden Problems sein kann, besteht ein Bausatz aus Pflastersteinen 10 gemäß Fig. 1 und einem weiteren Pflasterstein 10, bei dem die Seitenflächen 24, 25 der Abstandhalter 16, 17, 18 von der Oberseite 21 zur Unterseite 23 konvergieren. Bei dem zweiten Pflasterstein 10 des Bausatzes kann es sich auch um einen Pflasterstein 10 gemäß Fig. 1 handeln, der jedoch mit der Oberseite 21 nach unten gerichtet verlegt wird.

Durch die wechselweise Verlegung der Pflastersteine 10 des Bausatzes liegen die geneigten Seitenflächen 25 der Abstandhalter 16, 17, 18 eines Pflastersteins 10 an entsprechend geneigten Seitenflächen 25 der Abstandhalter 16, 17, 18 benachbarter Pflastersteine 10 an, wodurch zwischen den Pflastersteinen 10 sowohl horizontaler als auch vertikaler Verbund besteht.

Auch der erfindungsgemäße Bausatz ist nicht auf die vorliegende Ausführungsform beschränkt, es sind weitere Variationen hinsichtlich der Anordnung und Ausbildung der Abstandhalter 16, 17, 18 wie vorbeschrieben denkbar.

### Bezugszeichenliste

- 10: Pflasterstein
- 11: Steinkörper
- 12: Seitenfläche
- 13: Seitenfläche
- 14: Seitenfläche
- 15: Seitenfläche
- 16: Abstandhalter
- 17: Abstandhalter
- 18: Abstandhalter
- 19: Fuge
- 20: Erdreichabdeckung
- 21: Oberseite
- 22: Fase
- 23: Unterseite
- 24: Seitenfläche
- 25: Seitenfläche
- 26: Stimfläche
- 27: Abstand
- 28: Teilbereich
- 29: Reihe
- 30: Fugentiefe
- 31: Breite
- 32: Höhe
- 33: Steinhöhe
- 34: Teilbereich
- 35: Außenecke
- 36: Übergang
- 37: Achse
- 38: Abstand

## Patentansprüche

1. Bausatz aus Pflastersteinen (10) bzw. Pflasterplatten aus Beton zur Erstellung von Erdreichabdeckungen (20), wobei jeder Pflasterstein (10) im Wesentlichen aufrechte Seitenflächen (12, 13, 14, 15) und an diesen angeordnete aufrechte Abstandhalter (16, 17, 18) zur Bildung von Fugen (19) zwischen benachbarten Pflastersteinen (10) aufweist, wobei an einer Seitenfläche (14, 15) jedes Pflastersteins (10) mindestens zwei Abstandhalter (17, 18) nebeneinander angeordnet sind, **dadurch gekennzeichnet, dass**
a) einander zugewandte Seitenflächen (25) der nebeneinander angeordneten Abstandhalter (17, 18) mindestens in einem oberen Teilbereich (28) konvergierend zu einer Unterseite (23) des Pflastersteins (10) hin verlaufen,
b) an einer weiteren Seitenfläche (12, 13) jedes Pflastersteins (10) mindestens ein einzelner Abstandhalter (16) angeordnet ist, der innerhalb einer verlegten Erdreichabdeckung zwischen die einander zugewandten Seitenflächen (25) zweier nebeneinander angeordneter Abstandhalter (17, 18) eines benachbarten Pflastersteins (10) tritt.

2. Bausatz nach Anspruch 1, **dadurch gekennzeichnet, dass** eine Breite (31) des einzelnen Abstandhalters (16) kleiner als ein minimaler Abstand (27) zwischen den einander zugewandten Seitenflächen (25) der nebeneinander angeordneten Abstandhalter (16, 17) ist.

3. Bausatz nach Anspruch 1 oder 2, **dadurch gekennzeichnet, dass** der einzelne Abstandhalter (16) eine im Wesentlichen konstante Breite (31) aufweist.

4. Bausatz nach einem der vorstehenden Ansprüche, **dadurch gekennzeichnet, dass** die einander zugewandten Seitenflächen (25) der nebeneinander angeordneten Abstandhalter (17, 18) in einem oberen Teilbereich (28) konvergierend zueinander verlaufen und in einem unteren Teilbereich (34) im Wesentlichen parallel zueinander verlaufen.

5. Bausatz nach einem der vorstehenden Ansprüche, **dadurch gekennzeichnet, dass** jeweils zwei aneinandergrenzende Seitenflächen (12, 13; 14, 15) jedes Pflastersteins (10) übereinstimmend hinsichtlich Anzahl und Anordnung der Abstandhalter (16; 17, 18) ausgebildet sind.

6. Bausatz nach einem der vorstehenden Ansprüche, **dadurch gekennzeichnet, dass** die Anzahl der einzelnen Abstandhalter (16) jedes Pflastersteins (10) der Anzahl der nebeneinander angeordneten Abstandhalter-Paare (17, 18) entspricht.

7. Bausatz nach einem der vorstehenden Ansprüche, **dadurch gekennzeichnet, dass** zwei Seitenflächen (12, 13) jeweils zwei einzelne Abstandhalter (16) aufweisen und dass zwei weitere Seitenflächen (14, 15) jeweils vier nebeneinander angeordnete Abstandhalter (17, 18) aufweisen.

## Claims

1. Set of concrete paving blocks (10) or paving slabs for producing ground coverings (20), each paving block (10) having essentially upright side surfaces (12, 13, 14, 15) and upright spacers (16, 17, 18) which are arranged on said side surfaces and are intended for forming joints (19) between adjacent paving blocks (10), and at least two spacers (17, 18) being arranged one beside the other on a side surface (14, 15) of each paving block (10), **characterized in that**
a) mutually facing side surfaces (25) of the spacers (17, 18) arranged one beside the other converge in the direction of an underside (23) of the paving block (10) at least in a top sub-region (28),
b) at least one individual spacer (16) is arranged on a further side surface (12, 13) of each paving block (10), said spacer, within a laid ground covering, passing between the mutually facing side surfaces (25) of two spacers (17, 18) arranged one beside the other on an adjacent paving block (10).

2. Set according to Claim 1, **characterized in that** a width (31) of the individual spacer (16) is smaller than a minimal distance (27) between the mutually facing side surfaces (25) of the spacers (17, 18) arranged one beside the other.

3. Set according to Claim 1 or 2, **characterized in that** the individual spacer (16) has an essentially constant width (31).

4. Set according to one of the preceding claims, **characterized in that** the mutually facing side surfaces (25) of the spacers (17, 18) arranged one beside the other converge towards one another in a top sub-region (28) and run essentially parallel to one another in a bottom sub-region (34).

5. Set according to one of the preceding claims, **characterized in that** in each case two adjacent side surfaces (12, 13; 14, 15) of each paving block (10) are designed to correspond in terms of the number and arrangement of the spacers (16; 17, 18).

6. Set according to one of the preceding claims, **characterized in that** the number of individual spacers (16) of each paving block (10) corresponds to the number of spacer pairs (17, 18) arranged one beside the other.

7. Set according to one of the preceding claims, **characterized in that** two side surfaces (12, 13) each have two individual spacers (16), and **in that** two further side surfaces (14, 15) each have four spacers (17, 18) arranged one beside the other.

## Revendications

1. Jeu de construction constitué de pavés (10) ou de plaques de pavage en béton pour la réalisation de recouvrements de sol (20), dans lequel chaque pavé (10) présente des faces latérales sensiblement verticales (12, 13, 14, 15) et des élément d'espacements verticaux (16, 17, 18) placés sur celles-ci pour la formation de joints (19) entre pavés (10) voisins, au moins deux éléments d'espacement (17, 18) étant placés l'un à côté de l'autre sur une face latérale (14, 15) de chaque pavé (10), **caractérisé par le fait que**
a) des faces latérales en regard (25) des éléments d'espacement (17, 18) placés l'un à côté de l'autre convergent au moins dans une partie supérieure (18) vers la face inférieure (23) du pavé (10),
b) sur une autre face latérale (12, 13) de chaque pavé (10) est placé au moins un élément d'espacement distinct (16) qui, à l'intérieur d'un recouvrement de sol posé, se place entre les faces latérales en regard (25) de deux éléments d'espacement placés l'un à côté de l'autre (17, 18) d'un pavé (10) voisin.

2. Jeu de construction selon la revendication 1, **caractérisé par le fait que** la largeur (31) de l'élément d'espacement distinct (16) est inférieure à la distance minimale (27) entre les faces latérales en regard (25) des éléments d'espacement (16, 17) placés l'un à côté de l'autre.

3. Jeu de construction selon l'une des revendications 1 et 2, **caractérisé par le fait que** l'élément d'espacement distinct (16) a une largeur (31) sensiblement constante.

4. Jeu de construction selon l'une des revendications précédentes, **caractérisé par le fait que** les faces latérales en regard (25) des éléments d'espacement placés l'un à côté de l'autre (17, 18) convergent dans une partie supérieure (28) et sont sensiblement parallèles dans une partie inférieure (34).

5. Jeu de construction selon l'une des revendications précédentes, **caractérisé par le fait que** deux faces latérales adjacentes (12, 13 ; 14, 15) de chaque pavé (10) sont faites de manière concordante en ce qui concerne le nombre et la disposition des éléments d'espacement (16 ; 17, 18).

6. Jeu de construction selon l'une des revendications précédentes, **caractérisé par le fait que** le nombre d'éléments d'espacement distincts (16) de chaque pavé (10) correspond au nombre de paires d'éléments d'espacement placées l'une à côté de l'autre (17, 18).

7. Jeu de construction selon l'une des revendications précédentes, **caractérisé par le fait que** deux faces latérales (12, 13) présentent chacune deux éléments d'espacement distincts (16) et deux autres faces latérales (14, 15) présentent chacune quatre éléments d'espacement placés les uns à côté des autres (17, 18).
